# EUROPEAN PATENT APPLICATION

(11) **EP 3 905 239 A1**
(43) Date of publication of application: **03.11.2021**
(21) Application number: 18944489.6
(22) Date of filing: 25.12.2018
(51) Int. Cl.: G10L 15/22, G10L 15/10

(54) **INTERACTIVE DEVICE, INTERACTIVE METHOD, AND INTERACTIVE PROGRAM**

(71) Applicant: FUJITSU LIMITED, Kanagawa 211-8588 (JP)
(72) Inventor: TAIRA, Kei, Kawasaki-shi, Kanagawa 211-8588 (JP); IMAI, Takashi, Kawasaki-shi, Kanagawa 211-8588 (JP); SAWASAKI, Naoyuki, Kawasaki-shi, Kanagawa 211-8588 (JP)
(74) Representative: Hoffmann Eitle
(86) International application number: PCT/JP2018/047677
(87) International publication number: WO 2020/136733

(57) **Abstract**

A dialogue device (10) makes an utterance to a user on the basis of a dialogue block selected from among candidates for data configured to generate the utterance to the user, based on the context of an utterance of the user. Furthermore, the dialogue device (10) adds first data collected based on a keyword extracted from a dialogue between the user and the dialogue device (10) to the candidates for the data, asynchronously with processing of making the utterance. Here, the first data includes content collected from an ICT service and the dialogue block generated on the basis of the content.

## Description

### TECHNICAL FIELD

The present invention relates to a dialogue device, a dialogue method, and a dialogue program.

### BACKGROUND ART

In the past, a dialogue system that performs a dialogue with a user, using voice or text has been known. Dialogue systems include voice speakers, communication robots, chatbots, and the like. Furthermore, a technique in which a dialogue system selects a topic in accordance with the user's interests has been proposed.

For example, a device that performs a dialogue on the basis of interest data that includes the attribute of a topic and importance indicating the degree of interest of the user for each attribute has been known, in which the device updates the interest data according to the content of the dialogue with the user.

### CITATION LIST

### PATENT DOCUMENT

Patent Document 1: Japanese Laid-open Patent Publication No. 2004-343320
Patent Document 2: Japanese Laid-open Patent Publication No. 2003-044088
Patent Document 3: Japanese Laid-open Patent Publication No. 2003-323388

### SUMMARY OF INVENTION

### TECHNICAL PROBLEM

However, with the above technique, it is sometimes difficult to improve the response speed of the dialogue. Here, in order to diversify the topics in the dialogue with the user, it is conceivable to present content acquired from an information and communication technology (ICT) service provided via the Internet.

Since the number of ICT services on the Internet is enormous, if a search is made on the Internet after a user's utterance is received, there is a case where it takes a long time to finish the search and it becomes difficult to respond to the dialogue in a short time. Note that the ICT services include so-called news sites, social networking services (SNSs), and the like.

In one aspect, it is intended to provide a dialogue device, a dialogue method, and a dialogue program that improve the response speed of a dialogue.

### SOLUTION TO PROBLEM

In one mode, a dialogue device includes an utterance unit and an addition unit. The utterance unit makes an utterance to a user on the basis of data selected from among candidates for the data for generating the utterance to the user, based on the context of an utterance of the user. The addition unit adds first data collected based on a keyword extracted from a dialogue between the user and the dialogue device to the candidates for the data, asynchronously with processing by the utterance unit.

### ADVANTAGEOUS EFFECTS OF INVENTION

In one aspect, the response speed of a dialogue can be improved.

### BRIEF DESCRIPTION OF DRAWINGS

FIG. 1 is a functional block diagram illustrating a functional configuration of a dialogue device according to a first embodiment.
FIG. 2 is a diagram illustrating an example of dialogue blocks stored in a dialogue block storage unit.
FIG. 3 is a diagram explaining the collection of pieces of content.
FIG. 4 is a diagram explaining the addition of a dialogue block.
FIG. 5 is a diagram illustrating an example of a dialogue.
FIG. 6 is a sequence diagram illustrating a processing flow of the dialogue device.
FIG. 7 is a diagram explaining a hardware configuration example.

### DESCRIPTION OF EMBODIMENTS

Hereinafter, embodiments of a dialogue device, a dialogue method, and a dialogue program according to the present invention will be described in detail with reference to the drawings. Note that the present invention is not limited to the present embodiment. Furthermore, each of the embodiments may be appropriately combined within a range without inconsistency.

### [First Embodiment]

A dialogue device according to a first embodiment accepts an input of voice, text, or the like from a user. Furthermore, the dialogue device generates an utterance in response to the input, and outputs the generated utterance to the user by voice, text, or the like. With this mechanism, the dialogue device makes a dialogue with the user.

The dialogue device executes an utterance process of acquiring data for generating an utterance from a storage area, based on a user's response, and outputting the utterance generated on the basis of the acquired data. Furthermore, the dialogue device executes an addition process of collecting data for generating an utterance, based on a user's response or the like, and adding the collected data to the storage area mentioned above. Here, the dialogue device can execute the dialogue process and the addition process asynchronously. That is, the dialogue device can execute the addition process in parallel even while executing the dialogue process.

### [Functional Configuration]

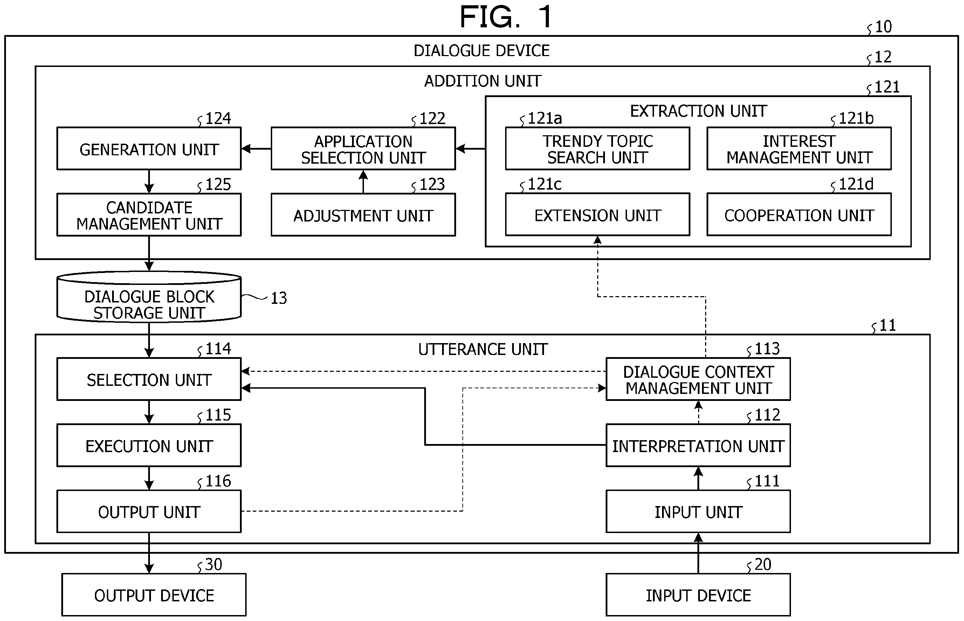

FIG. 1 is a functional block diagram illustrating a functional configuration of the dialogue device according to the first embodiment. As illustrated in FIG. 1, the dialogue device 10 includes an utterance unit 11, an addition unit 12, and a dialogue block storage unit 13. Furthermore, the dialogue device 10 can be connected to the Internet via a communication interface such as a network interface card (NIC). In addition, the utterance unit 11 and the addition unit 12 are implemented by processors or the like.

The dialogue block storage unit 13 is implemented by a hard disk, a memory, or the like. The dialogue block storage unit 13 stores a dialogue block, which is information in which the content of an utterance is defined in advance, in the dialogue block storage unit 13. Here, the dialogue block stored in the dialogue block storage unit 13 may be generated on the basis of a piece of content collected from an information and communication technology (ICT) service such as a website, or may be the whole piece of content. Note that the dialogue blocks stored in the dialogue block storage unit 13 are an example of candidates for data configured to generate the utterance to the user.

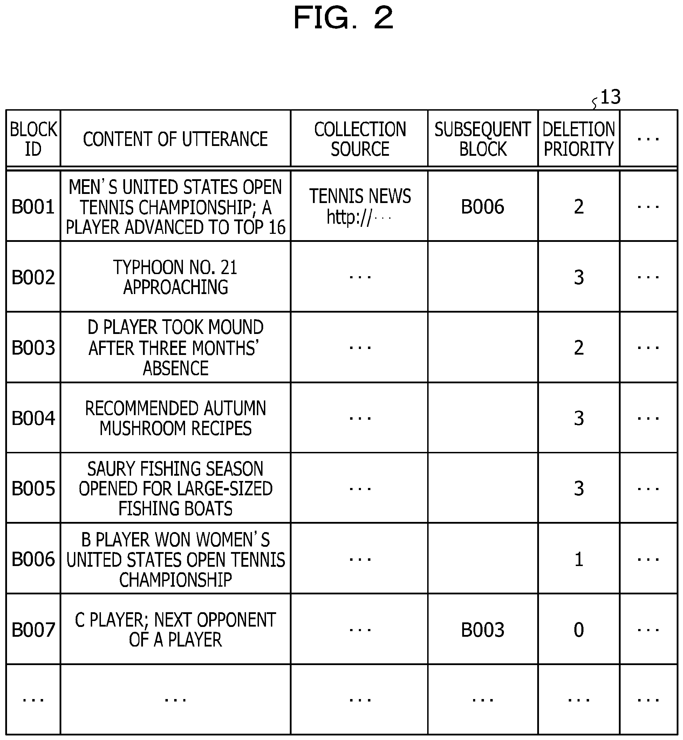

FIG. 2 is a diagram illustrating an example of the dialogue block stored in a dialogue blocks database (DB) . Each record in the table in FIG. 2 is the dialogue block. As illustrated in FIG. 2, the dialogue block includes items such as "block ID", "content of utterance", "collection source", "subsequent block", and "deletion priority". Note that the dialogue device 10 can select any of the dialogue blocks stored in the dialogue block storage unit 13, and output an utterance generated on the basis of the selected dialogue block.

"Block ID" is an identifier (ID) for identifying the dialogue block. "Content of utterance" represents the whole utterance to be generated or information used to generate the utterance.

"Collection source" represents information indicating the source of collection of the dialogue block. For example, when the dialogue block has been collected from a website, the collection source can have the uniform resource locator (URL) of the website.

"Subsequent block" represents the block ID of a dialogue block from which an utterance following the utterance generated from the present dialogue block is to be generated.

"Deletion priority" represents the priority when the dialogue block is deleted. Here, a dialogue block having a higher deletion priority is preferentially deleted. For example, when the data size of the dialogue block storage unit 13 exceeds a certain value, the dialogue device 10 can delete the dialogue blocks in descending order of priority until the data size reaches the certain value or less. Furthermore, the deletion priority is appropriately updated by the dialogue device 10.

In the example in FIG. 2, the content of utterance of a dialogue block with the block ID "B001" is "Men's United States Open Tennis Championship; A Player Advanced to Top 16", and the URL of the website "Tennis News" is set as the collection source. Furthermore, a block subsequent to the dialogue block whose block ID is "B001" is "B006", and has a deletion priority of "2".

The items of the dialogue block are not restricted to the items illustrated in FIG. 2. For example, the dialogue block may include information indicating the date and time when the dialogue block was generated, conditions for the dialogue block to be used for utterance generation, and the like.

The utterance unit 11 makes an utterance to the user on the basis of data selected from among candidates for the data for generating the utterance to the user, based on the context of an utterance of the user. The utterance unit 11 includes an input unit 111, an interpretation unit 112, a dialogue context management unit 113, a selection unit 114, an execution unit 115, and an output unit 116.

The input unit 111 accepts the input of an utterance of the user via an input device 20. Furthermore, the utterance input to the input unit 111 includes the user's reaction to an utterance output to the user.

The input device 20 is a device for the user to input information such as voice or text. For example, the input device 20 is a microphone, a keyboard, a touch panel display, and the like. Furthermore, the input device 20 may include a sensor for acquiring information relating to the user. For example, the input device 20 may include a camera, a thermometer, an acceleration sensor, and the like.

The interpretation unit 112 interprets the utterance input to the input unit 111. For example, the interpretation unit 112 analyzes the utterance input as a voice, using a known voice recognition technique. Furthermore, the interpretation unit 112 can perform morphological analysis on the text to extract a keyword and interpret the meaning.

Moreover, the interpretation unit 112 can evaluate the degree of interest of the user in the topic. For example, the interpretation unit 112 evaluates the degree of interest on the basis of whether the user's reaction is in an affirmative manner or a rejecting manner.

For example, the interpretation unit 112 verifies that the user's reaction is positive when the user's reaction contains words meaning agreement, such as "yes" and "like". In this case, the interpretation unit 112 evaluates that the user has a high degree of interest in the current topic.

Furthermore, for example, when the user's reaction contains words meaning opposition, such as "no" and "not interested", or when the user's reaction is only a short reply, the interpretation unit 112 verifies that the user's reaction is negative. In this case, the interpretation unit 112 evaluates that the user has a low degree of interest in the current topic.

Moreover, the interpretation unit 112 may verify whether the user's reaction is positive or negative from information acquired by a sensor included in the input device 20. For example, the interpretation unit 112 can verify whether the user has made a positive reaction on the basis of the facial expression of the user captured by a camera and the voice tone of the user collected by a microphone.

The dialogue context management unit 113 holds the result of the interpretation by the interpretation unit 112 and provides the result to each unit. For example, the dialogue context management unit 113 provides the addition unit 12 or the selection unit 114 with information for specifying the magnitude of the degree of interest of the user in the current topic and what genre the current topic belongs to. Furthermore, the dialogue context management unit 113 may acquire the content of the utterance output by the dialogue device 10 from the output unit 116, and hold and provide the acquired content together with the result of the interpretation.

The selection unit 114 selects a dialogue block from the dialogue block storage unit 13. For example, when a subsequent block is designated in the dialogue block storage unit 13 for the dialogue block being selected, the selection unit 114 selects the subsequent block. Furthermore, the selection unit 114 may select a dialogue block that suits the user's interest on the basis of the result of the interpretation by the interpretation unit 112 and the information provided by the dialogue context management unit 113.

The selection unit 114 selects a dialogue block that suits the context of the dialogue and the user's profile on the basis of preset selection conditions. Meanwhile, by processing of the addition unit 12 described later, candidates for a dialogue block suitable for the user who is performing the dialogue are prepared in the dialogue block storage unit 13. Therefore, the dialogue block selected by the selection unit 114 is prepared for a specific purpose in accordance with the user who is performing the dialogue, and the possibility that the dialogue is broken due to the output of a completely meaningless utterance is lowered.

Note that the specific purpose includes not only aligning with the context, but also establishing a natural dialogue like a dialogue between humans, adjusting the balance of topics, and the like. Furthermore, according to the processing of the addition unit 12, the amount of consumption of the storage capacity of the dialogue block storage unit 13 can be reduced.

The execution unit 115 generates an utterance from the dialogue block selected by the selection unit 114. Here, the utterance generated by the execution unit 115 is a sentence that can be interpreted by the user. Note that, when the selected dialogue block contains a sentence for utterance, the execution unit 115 may employ the sentence as it is for utterance. In the following description, it is assumed that "executing the dialogue block" means that the execution unit 115 generates an utterance from the dialogue block.

The output unit 116 outputs the utterance generated by the execution unit 115 to the user via an output device 30. At this time, the output unit 116 may output the utterance as voice or may output the utterance as text. Note that the execution unit 115 and the output unit 116 are an example of an utterance unit.

The output device 30 is a device for outputting an utterance to the user. The output device 30 may output the utterance by voice or may output the utterance by text. For example, the output device 30 is a speaker, a display, or the like.

The addition unit 12 adds first data collected based on a keyword extracted from a dialogue between the user and the dialogue device to the candidates for the data, asynchronously with processing by the utterance unit 11. Asynchronous processing is implemented by the utterance unit 11 and the addition unit 12 each proceeding with the own processing regardless of the progress of the processing of the other. Furthermore, the asynchronous processing may be implemented by executing the processing of the utterance unit 11 and the processing of the addition unit 12 by different devices or processors from each other. In addition, the asynchronous processing may be implemented by executing the processing of the utterance unit 11 and the processing of the addition unit 12 on different threads from each other of one processor.

Besides, the addition unit 12 includes an extraction unit 121, an application selection unit 122, an adjustment unit 123, a generation unit 124, and a candidate management unit 125. Furthermore, the extraction unit 121 includes a trendy topic search unit 121a, an interest management unit 121b, an extension unit 121c, and a cooperation unit 121d.

The extraction unit 121 controls the collection of the first data and second data. For example, the extraction unit 121 extracts a topic for searching for a piece of content, from the content of the dialogue or the like. Note that the topic is expressed as a keyword. Specifically, the extraction unit 121 controls the application selection unit 122 such that the target piece of content is collected. For example, the extraction unit 121 designates a keyword as a content search condition for the application selection unit 122.

The extension unit 121c extracts a keyword for searching for a piece of content that suits the context of the dialogue, which is the first data. The first data is a piece of content from which the dialogue block was generated with the purpose of aligning the utterance with the context. Meanwhile, as described earlier, the dialogue blocks stored in the dialogue block storage unit 13 include those for the purpose of establishing a natural dialogue like a dialogue between humans, adjusting the balance of topics, and the like. Here, a piece of content for generating a dialogue block for the purpose of establishing a natural dialogue like a dialogue between humans, adjusting the balance of topics, and the like is assumed as the second data.

The addition unit 12 further adds, to the candidates for the data, the second data that relates to topics that are trendy in a predetermined ICT service, topics that match a predetermined taste that has been preset, and topics that match an interest of the user acquired in advance. At this time, the addition unit 12 adds the data such that the ratio between the number of pieces of the first data and the number of pieces of the second data is kept constant. The trendy topic search unit 121a, the interest management unit 121b, and the cooperation unit 121d pass the keywords for collecting the second data to the application selection unit 122.

The trendy topic search unit 121a passes trend keywords acquired from news sites and SNSs to the application selection unit 122. Furthermore, the interest management unit 121b passes keywords relating to topics that is preset in the dialogue device 10 and changed every few days to several weeks, to the application selection unit 122. In addition, the cooperation unit 121d passes keywords relating to the user's preference, the user's schedule, the SNS feed used by the user, and the like to the application selection unit 122.

The application selection unit 122 determines an application as a content collection source, and collects a piece of content from the determined application. Here, the application represents an interface for browsing pieces of content provided by the ICT service, and is assumed to include an application, a website, and the like.

The application selection unit 122 searches for and collects a piece of content by designating a keyword and sending a request to a website, or executing a predetermined application programming interface (API) for each application, or the like. The application selection unit 122 searches for a piece of content using the keywords passed from the extraction unit 121.

The adjustment unit 123 controls the application selection unit 122 to adjust the number of dialogue blocks generated from the pieces of content collected based on the keywords passed from each unit of the extraction unit 121. The utterance tendency of the dialogue device 10 is determined by the adjustment by the adjustment unit 123.

Here, a dialogue block generated from a piece of content collected based on the keywords from the extension unit 121c is assumed as a context dialogue block. Furthermore, a dialogue block generated from a piece of content collected based on the keywords from the trendy topic search unit 121a is assumed as a trendy dialogue block. In addition, a dialogue block generated from a piece of content collected based on the keywords from the interest management unit 121b is assumed as an interest dialogue block. Besides, a dialogue block generated from a piece of content collected based on the keywords from the cooperation unit 121d is assumed as a cooperation dialogue block.

For example, when the dialogue device 10 is configured to provide a larger number of topics, the adjustment unit 123 makes an adjustment such that the percentages of the number of context dialogue blocks, the number of trendy dialogue blocks, the number of interest dialogue blocks, and the number of cooperation dialogue blocks reach, for example, 40%, 20%, 10%, and 30%, respectively.

Furthermore, for example, when the dialogue device 10 is given a tendency to continue the topic, the adjustment unit 123 makes an adjustment such that the percentages of the number of context dialogue blocks, the number of trendy dialogue blocks, the number of interest dialogue blocks, and the number of cooperation dialogue blocks reach, for example, 60%, 15%, 5%, and 20%, respectively.

The generation unit 124 generates a dialogue block on the basis of the piece of content collected by the application selection unit 122. Furthermore, the generation unit 124 may employ the whole piece of content as a dialogue block.

The candidate management unit 125 saves the dialogue block generated by the generation unit 124 in the dialogue block storage unit 13. Furthermore, the candidate management unit 125 includes at least the collection source of the piece of content from which the context dialogue block was generated, into the dialogue block. That is, the candidate management unit 125 saves information that specifies the collection source of the first data in a predetermined storage area. Note that the candidate management unit 125 may list the collection sources of pieces of content and save the list in a storage area different from the dialogue block storage unit 13.

The candidate management unit 125 updates the deletion priority for the dialogue block storage unit 13. Furthermore, the candidate management unit 125 deletes a dialogue block stored in the dialogue block storage unit 13. For example, the candidate management unit 125 checks the data size of the dialogue block storage unit 13 at every regular time cycle, and when the data size exceeds a certain value, deletes the dialogue blocks in descending order of priority until the data size reaches the certain value or less.

The candidate management unit 125 first sets the deletion priority of a newly added dialogue block to, for example, "0". Then, the candidate management unit 125 increases the deletion priority of each dialogue block by, for example, one each time a certain time elapses. Moreover, the candidate management unit 125 decreases the deletion priority of a dialogue block selected by the selection unit 114 by, for example, one each time a certain time elapses. That is, the candidate management unit 125 deletes data that has not been selected by the selection unit 114 even once, more preferentially than data that has been selected by the selection unit 114 one or more times. Note that the candidate management unit 125 is an example of a deletion unit. Furthermore, the candidate management unit 125 may not increase the deletion priority of a dialogue block designated as the subsequent block.

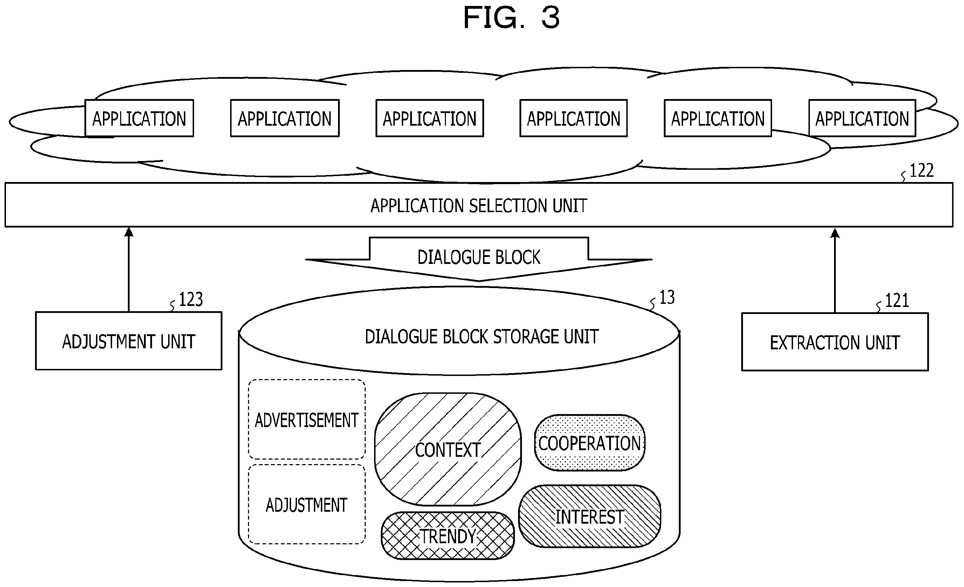

FIG. 3 is a diagram explaining the collection of pieces of content. As illustrated in FIG. 3, the application selection unit 122 collects pieces of content from the selected application in response to the keyword designation by the extraction unit 121 and the adjustment by the adjustment unit 123. Then, a dialogue block generated on the basis of the collected pieces of content is saved in the dialogue block storage unit 13.

At this time, the percentages of the number of context dialogue blocks, the number of trendy dialogue blocks, the number of cooperation dialogue blocks, and the number of interest dialogue blocks is consistent with the adjustment by the adjustment unit 123. Furthermore, the dialogue block may include a predetermined dialogue block for the purpose of advertisement or adjustment, in addition to the dialogue block generated on the basis of the pieces of content collected from the application.

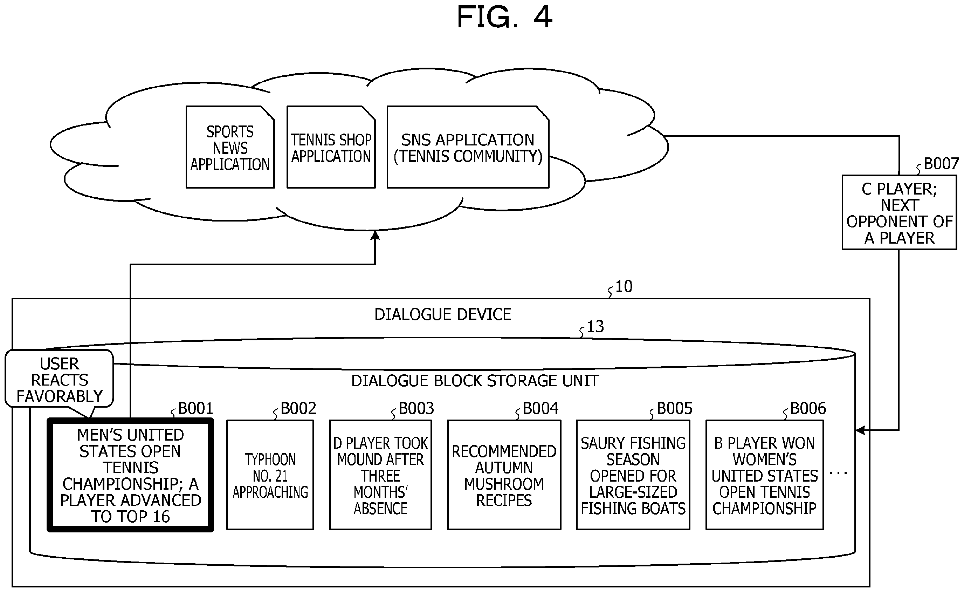

FIG. 4 is a diagram explaining the addition of a dialogue block. As illustrated in FIG. 4, it is assumed that the user shows a favorable reaction to an utterance based on the dialogue block B001. At this time, the dialogue device 10 extracts a keyword relating to the men's tennis indicated in the dialogue block B001 as a keyword that suits the context. Then, the dialogue device 10 collects pieces of content relating to the men's tennis on the basis of the keyword. Thereafter, a dialogue block B007 generated on the basis of the pieces of content relating to the men's tennis is added to the dialogue block storage unit 13.

Here, during a period after the user showed a favorable reaction to the utterance generated on the basis of the dialogue block B001 until the dialogue block B007 is added, the dialogue block storage unit 13 has no dialogue block relating to the men's tennis except for the dialogue block B001. Therefore, the dialogue device 10 makes an utterance based on the dialogue block B006 designated as the subsequent block of the dialogue block B001. Thereafter, once the dialogue block B007 is added, the dialogue device 10 is allowed to make an utterance on the basis of the dialogue block B007 more preferentially than the dialogue block B006 designated as the subsequent block of the dialogue block B006.

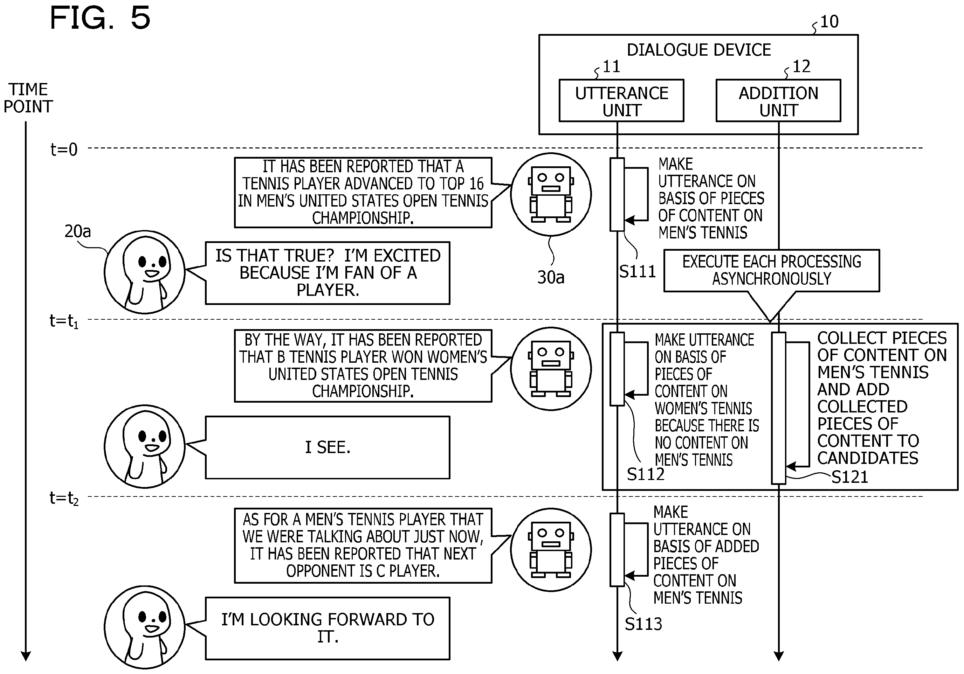

FIG. 5 is a diagram illustrating an example of a dialogue. FIG. 5 illustrates an example when the dialogue is performed by text chat. The balloons popping up from an icon 20a represents the user's utterances. Furthermore, the balloons popping up from an icon 30a represents the utterances of the dialogue device 10. In addition, the dialogue device 10 asynchronously executes the processing of the utterance unit 11 and the processing of the addition unit 12.

First, the utterance unit 11 makes an utterance at a time point 0 on the basis of pieces of content on the men's tennis (step S111) . Since the user shows an affirmative reaction to the utterance at a time point t₁, the addition unit 12 starts the processing of collecting pieces of content on the men's tennis and adding the collected pieces of content to the candidates (start of step S121).

Meanwhile, since pieces of content on the men's tennis are not added until a time point t₂, the utterance unit 11 makes an utterance on the basis of pieces of content on the women's tennis designated subsequently (step S112). Then, at the time point t₂, since the addition of pieces of content on the men's tennis has been completed by the addition unit 12 (end of step S121), the dialogue device 10 makes an utterance on the basis of the added pieces of content on the men's tennis (step S113).

As described above, in the example in FIG. 5, step S112 by the utterance unit 11 and step S121 by the addition unit 12 are executed asynchronously and in parallel. Therefore, the dialogue device 10 can make a response even from the time point t₁ to the time point t₂, and can continue the dialogue without stopping the dialogue.

### [Flow of Processing]

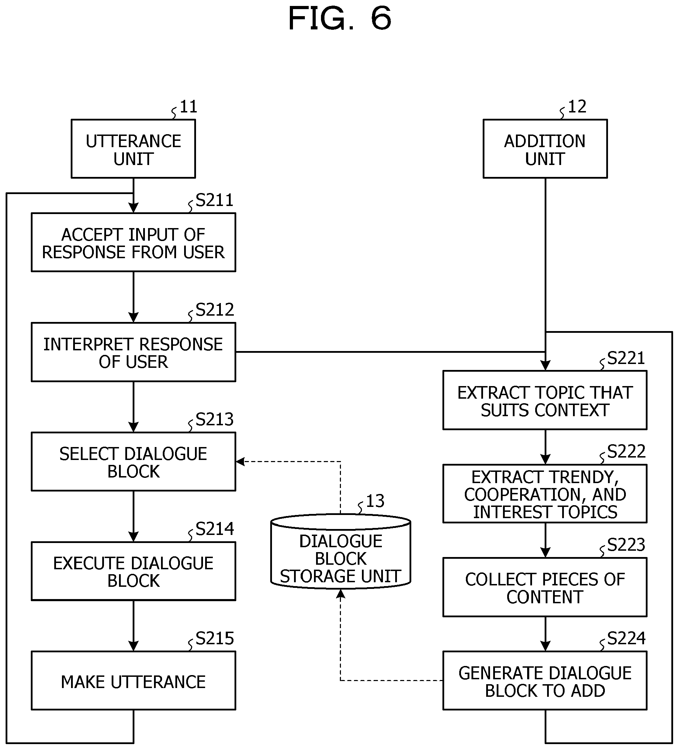

The processing flow of the dialogue device 10 will be described with reference to FIG. 6. FIG. 6 is a sequence diagram illustrating a processing flow of the dialogue device. As illustrated in FIG. 6, the utterance unit 11 and the addition unit 12 asynchronously perform processing in parallel. First, the utterance unit 11 accepts the input of a response to an utterance from a user (step S211). Then, the utterance unit 11 interprets the response of the user (step S212). At this time, the result of the interpretation is passed to the addition unit 12.

Next, the utterance unit 11 selects a dialogue block from the dialogue block storage unit 13 (step S213). Then, the utterance unit 11 executes the selected dialogue block, and generates an utterance (step S214). Moreover, the utterance unit 11 outputs the generated utterance (step S215), and returns to step S211 to repeat the processing.

Meanwhile, the addition unit 12 extracts a topic that suits the context on the basis of the received result of the interpretation (step S221). Furthermore, the addition unit 12 extracts trendy, cooperation, and interest topics, which are not directly related to the context (step S222) . Then, the addition unit 12 collects pieces of content on the basis of the extracted topics (step S223). Here, the addition unit 12 generates a dialogue block on the basis of the collected pieces of content to add the generated dialogue block to the dialogue block storage unit 13 (step S224), and returns to step S221 to repeat the processing.

As illustrated in FIG. 6, the addition unit 12 updates the dialogue block storage unit 13, and the utterance unit 11 reads the dialogue block storage unit 13. At this time, the utterance unit 11 does not wait for the timing when the dialogue block storage unit 13 is updated by the addition unit 12. Furthermore, irrespective of whether the dialogue block storage unit 13 has been updated, the dialogue block storage unit 13 is referred to in step S213. Accordingly, a dialogue block added by the addition unit 12 before the start of step S213 by the utterance unit 11 is available in step S213.

### [Effects]

As described above, the dialogue device 10 makes an utterance to the user on the basis of data selected from among candidates for the data for generating the utterance to the user, based on the context of an utterance of the user. Furthermore, the dialogue device 10 adds first data collected based on a keyword extracted from a dialogue between the user and the dialogue device 10 to the candidates for the data, asynchronously with processing of making the utterance. In this manner, the dialogue device 10 can execute processing of adding the dialogue block asynchronously even while the processing of making the utterance is being executed. Therefore, the dialogue device 10 can improve the response speed of a dialogue.

In addition, the dialogue device 10 further adds, to the candidates for the data, second data that relates to topics that are trendy in a predetermined ICT service, topics that match a predetermined taste that has been preset, and topics that match an interest of the user acquired in advance such that the ratio of the number of pieces of the first data to the number of pieces of the second data is kept constant. In this manner, the dialogue device 10 not only can make an utterance in line with the context but also can present a topic, for example. Therefore, the dialogue device 10 can perform a wider variety of dialogues.

The dialogue device 10 saves information that specifies the collection source of the first data in a predetermined storage area. This allows the dialogue device 10 to refer to the collection source and collect a piece of content again to deal with the past topic, even when the dialogue block based on the piece of content has been deleted.

The dialogue device 10 deletes data that has not been selected even once by the processing of making the utterance, from among the candidates for the data, more preferentially than data that has been selected once or more by the processing of making the utterance. This allows the dialogue device 10 to leave a dialogue block having the possibility of being further selected after the dialogue block has been selected.

The dialogue device 10 adds a piece of content collected from the ICT service via the Internet to the candidates for the data. This allows the dialogue device 10 to collect a piece of content for generating the dialogue block from among an enormous number of pieces of content.

Note that, the above embodiment assumes that the processing of the utterance unit 11 and the addition unit 12 are performed asynchronously, but the processing of collecting pieces of content corresponding to the respective units of the extraction unit 121 and generating the dialogue block may be further performed asynchronously. In this case, even while no dialogue is being performed, the trendy, cooperation, and interest dialogue blocks are added separately and independently, such that the dialogue device 10 can present a topic based on the latest information when the dialogue begins.

### [System]

Pieces of information including a processing procedure, a control procedure, a specific name, various types of data, and parameters described above or illustrated in the drawings may be optionally changed unless otherwise specified. Furthermore, the specific examples, distributions, numerical values, and the like described in the embodiments are merely examples, and may be changed in any ways.

In addition, each component of each device illustrated in the drawings is functionally conceptual and does not necessarily have to be physically configured as illustrated in the drawings. For example, specific forms of distribution and integration of each device are not limited to those illustrated in the drawings. That is, for example, all or a part of the devices may be configured by being functionally or physically distributed and integrated in optional units according to various types of loads, usage situations, or the like. Moreover, all or any part of individual processing functions performed in each device may be implemented by a central processing unit (CPU) and a program analyzed and executed by the CPU, or may be implemented as hardware by wired logic.

### [Hardware]

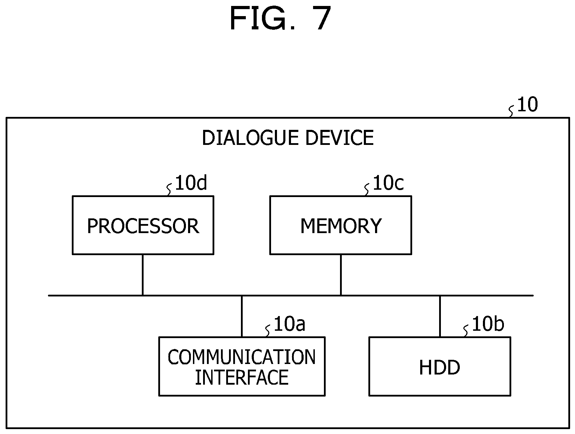

FIG. 7 is a diagram explaining a hardware configuration example. As illustrated in FIG. 7, the dialogue device 10 includes a communication device 10a, a hard disk drive (HDD) 10b, a memory 10c, and a processor 10d. Furthermore, the respective units illustrated in FIG. 7 are interconnected by a bus or the like.

The communication device 10a is a network interface card or the like and communicates with another server. The HDD 10b stores a program that activates the functions illustrated in FIG. 1, and a DB.

The processor 10d reads a program that executes processing similar to the processing of each processing unit illustrated in FIG. 1 from the HDD 10b or the like, and develops the read program in the memory 10c, thereby activating a process that executes each function described with reference to FIG. 2 or the like. For example, this process executes a function similar to the function of each processing unit included in the dialogue device 10. Specifically, the processor 10d reads a program having functions similar to the functions of the utterance unit 11 and the addition unit 12 from the HDD 10b or the like. Then, the processor 10d executes a process that executes processing similar to the processing of the utterance unit 11, the addition unit 12, and the like.

As described above, the dialogue device 10 operates as an information processing device that executes a classification method by reading and executing a program. Furthermore, the dialogue device 10 may also implement functions similar to the functions of the above-described embodiments, by reading the program described above from a recording medium by a medium reading device and executing the read program described above. Note that this program referred to in other embodiments is not limited to being executed by the dialogue device 10. For example, the present invention may be similarly applied to a case where another computer or server executes the program, or a case where such computer and server cooperatively execute the program.

This program may be distributed via a network such as the Internet. Furthermore, this program may be recorded on a computer-readable recording medium such as a hard disk, flexible disk (FD), compact disc read only memory (CD-ROM), magneto-optical disk (MO), or digital versatile disc (DVD), and may be executed by being read from the recording medium by a computer.

### REFERENCE SIGNS LIST

- 10: dialogue device
- 11: utterance unit
- 12: addition unit
- 13: dialogue block storage unit
- 111: input unit
- 112: interpretation unit
- 113: dialogue context management unit
- 114: selection unit
- 115: execution unit
- 116: output unit
- 121: extraction unit
- 121a: trendy topic search unit
- 121b: interest management unit
- 121c: extension unit
- 121d: cooperation unit
- 122: application selection unit
- 123: adjustment unit
- 124: generation unit
- 125: candidate management unit

## Claims

1. A dialogue device comprising:
an utterance unit that makes an utterance to a user on a basis of data selected from among candidates for the data prepared to generate the utterance to the user, based on context of an utterance of the user; and
an addition unit that adds first data collected based on a keyword extracted from a dialogue between the user and the dialogue device to the candidates for the data, asynchronously with processing by the utterance unit.

2. The dialogue device according to claim 1, wherein the addition unit further adds, to the candidates for the data, second data that relates to topics that are trendy in an information and communication technology (ICT) service that is predetermined, topics that match a predetermined taste that has been preset, and topics that match an interest of the user acquired in advance such that a ratio of a number of pieces of the first data to a number of pieces of the second data is kept constant.

3. The dialogue device according to claim 1, wherein the addition unit saves information that specifies a collection source of the first data in a predetermined storage area.

4. The dialogue device according to claim 1, further comprising a deletion unit that deletes data that has not been selected even once by the utterance unit, from among the candidates for the data, more preferentially than data that has been selected once or more by the utterance unit.

5. The dialogue device according to claim 1, wherein the addition unit adds a piece of content collected from the ICT service via the Internet to the candidates for the data.

6. A dialogue method comprising:
making, by a computer, an utterance to a user on a basis of data selected from among candidates for the data prepared to generate the utterance to the user, based on context of an utterance of the user; and
adding first data collected based on a keyword extracted from a dialogue between the user and the dialogue device to the candidates for the data, asynchronously with processing of the utterance.

7. A dialogue program causing a computer to execute a processing, the processing comprising:
making an utterance to a user on a basis of data selected from among candidates for the data prepared to generate the utterance to the user, based on context of an utterance of the user; and
adding first data collected based on a keyword extracted from a dialogue between the user and the dialogue device to the candidates for the data, asynchronously with processing of the utterance.
